# EUROPÄISCHE PATENTANMELDUNG

(11) **EP 0 880 263 A2**
(43) Veröffentlichungstag der Anmeldung: **25.11.1998**
(21) Anmeldenummer: 98440098.6
(22) Anmeldetag: 15.05.1998
(51) Int. Cl.: H04M 15/00, H04M 7/00, H04M 3/22

(54) **Vorrichtung und Verfahren zum Zugriff auf Teilnehmerdaten über Telekommunikations-Endgeräte**

(30) Priorität: 20.05.1997 DE 19720988
(71) Anmelder: Alcatel Alsthom Compagnie Generale d'Electricité, 75088 Paris (FR)
(72) Erfinder: Rothenhöfer, Karl, 71229 Leonberg (DE); Neufeldt, Helmut, 70499 Stuttgart (DE)
(74) Vertreter: Zinsinger, Norbert

(57) **Zusammenfassung**

Ein TK-Netzwerk (1) mit einer TK-Vermittlungseinheit (2, 2', 2' '), an der mindestens ein TK-Endgerät (3, 3', 3' ') angeschlossen ist, und die über eine Datenverbindung von einem Zentralrechner (4) aus der Ferne betrieben und gewartet werden kann, ist dadurch gekennzeichnet, daß an die TK-Vermittlungseinheit (2, 2', 2' ') ein Verbindungsdaten-Rechner (5) angeschlossen ist, der fortlaufend in Echtzeit Kommunikationsdaten der TK-Netzverbindungen der an die TK-Vermittlungseinheit (2, 2', 2' ') angeschlossenen TK-Endgeräte (3, 3', 3 ' ') von der TK-Vermittlungseinheit (2, 2', 2'') empfängt und diese Kommunikationsdaten auf Anfrage an den Zentralrechner (4) weiterleitet, und daß über die TK-Vermittlungseinheit (2, 2', 2' ') und ein On-Line-Datennetzwerk (6) eine bidirektionale Datenverbindung zwischen einem TK-Endgerät (3, 3', 3'') und dem Verbindungsdaten-Rechner (5) hergestellt werden kann und Kommunikationsdaten für dasselbe oder ein anderes an die TK-Vermittlungseinheit (2, 2', 2' ') angeschlossenes TK-Endgerät (3, 3', 3' ') abgerufen und/oder Dienstleistungen vom Netzwerkbetreiber angefordert werden können. Dies erlaubt insbesondere auch indirekt einen Zugriff des Teilnehmers auf die TK-Vermittlungseinheit.

## Beschreibung

Die Erfindung betrifft ein Telekommunikations (TK) -Netzwerk mit einer TK-Vermittlungseinheit, an der mindestens ein TK-Endgerät angeschlossen ist, und die über eine Datenverbindung von einem Zentralrechner aus der Ferne durch den Betreiber des TK-Netzwerks betrieben und gewartet werden kann, wobei insbesondere auch Gebührendaten von Teilnehmern des TK-Netzwerks zum Zentralrechner übermittelt werden können.

Derartige TK-Netzwerke sind allgemein bekannt.

Die Zahl der Anbieter, die Telekommunikations- und andere Dienstleistungen über TK-Netzwerke anbieten, sowie die Zahl der Netzwerke selbst ist ständig im Steigen begriffen. Dabei handelt es sich nicht nur um klassische, drahtgebundene oder drahtlose Telefonnetze, sondern auch um "Datenautobahnen" im allgemeinen Sinn, auf denen beliebige kommunikative Dienstleistungen erbracht werden können.

Da diese Dienstleistungen in der Regel nicht kostenfrei erbracht werden, entstehen normalerweise für die Benutzung Entgeltforderungen des Netzwerk-Betreibers gegenüber dem Netzwerk-Teilnehmer. Eine Information über die zu entrichtenden Gebühren enthielt beim klassischen Telefonnetz der Teilnehmer bisher üblicherweise durch monatliche Zusendung einer Telefonrechnung. Falls ein Gebührenzähler am Endgerät vorhanden war, konnte der Telefon-Benutzer bislang auch aufgrund der angezeigten Gebühreneinheiten pro Gespräch das Anwachsen seiner Gebührenschuld selbst überwachen, indem er die jeweils angefallenen Einheiten mitnotierte, was jedoch ein lückenhaftes und umständliches Verfahren ist. Großkunden können seit einiger Zeit auch Fernsprechgebührenrechnungen auf CD-ROM erhalten, allerdings auch erst nach Ablauf eines Abrechnungszeitraums. Einen direkten Datenzugriff zur Ermittlung einer aktuellen, seit Beginn des Abrechnungszeitraums aufgelaufenen Entgeltforderung haben bislang lediglich authorisierte Bediener des Netzwerkbetreibers. Diese wiederum sind aber nicht an der Ermittlung der aktuellen Gebührenschuld eines ihnen ansonsten unbekannten Netzwerk-Teilnehmers interessiert.

Aufgabe der vorliegenden Erfindung ist es demgegenüber, eine Vorrichtung und ein Verfahren zum Zugriff auf Teilnehmerdaten über Telekommunikations-Endgeräte vorzustellen, das insbesondere auch indirekt einen Zugriff des Teilnehmers auf die TK-Vermittlungseinheit erlaubt.

Erfindungsgemäß wird diese Aufgabe auf ebenso überraschend einfache wie wirkungsvolle Art und Weise dadurch gelöst, daß an die TK-Vermittlungseinheit ein Verbindungsdaten-Rechner angeschlossen ist, der fortlaufend in Echtzeit Kommunikationsdaten der TK-Netzverbindungen der an die TK-Vermittlungseinheit angeschlossenen TK-Endgeräte von der TK-Vermittlungseinheit empfängt und diese Kommunikationsdaten auf Anfrage an den Zentralrechner weiterleitet, und daß über die TK-Vermittlungseinheit und ein On-Line-Datennetzwerk eine bidirektionale Datenverbindung zwischen einem TK-Endgerät und dem Verbindungsdaten-Rechner hergestellt werden kann und Kommunikationsdaten für dasselbe oder ein anderes an die TK-Vermittlungseinheit angeschlossenes TK-Endgerät abgerufen und/oder Dienstleistungen vom Netzwerkbetreiber angefordert werden können.

Ein derartiger Verbindungsdaten-Rechner kann je nach Bedarf entweder in Form eines Mikroprozessors ausgeführt sein, wobei dann allerdings für größere TK-Netzwerke eine Vielzahl von Verbindungsdaten-Rechnern erforderlich ist. Falls der Netzwerk-Betreiber die Zahl der Verbindungsdaten-Rechner reduzieren will, können diese in Form von größeren Prozessoreinheiten ausgeführt werden, an die jeweils eine Vielzahl von TK-Vermittlungseinheiten angeschlossen ist. In jedem Fall kann der Benutzer des TK-Netzwerks von einem TK-Endgerät aus über die zuständige TK-Vermittlungseinheit direkt auf den Verbindungsdaten-Rechner zugreifen und aus diesem Kommunikationsdaten abfragen und/oder Dienstleistungen anfordern, wobei die abgerufenen Daten oder angeforderten Dienstleistungen dann jeweils über das TK-Netzwerk an das TK-Endgerät vermittelt werden.

Zur generellen Verwaltung, insbesondere zum Betrieb und zur Wartung des TK-Netzwerks ist nach wie vor der Zentralrechner vorgesehen, an den der Vermittlungsdaten-Rechner die Kommunikationsdaten entweder permanent oder auf Anfrage weiterleitet. Umgekehrt kann der Zentralrechner auch Befehle an den Verbindungsdaten-Rechner leiten, die dieser entweder an die TK-Vermittlungseinheiten, die an ihn angeschlossen sind, oder an das TK-Netzwerk weitergibt. Vorzugsweise wird die Verbindung zwischen dem Verbindungsdaten-Rechner und dem Zentralrechner einerseits und mindestens eine Verbindung zwischen dem Verbindungsdaten-Rechner und den TK-Vermittlungseinheiten eine Direktverbindung sein. Zusätzlich ist der Verbindungsdaten-Rechner aber auch über das TK-Netzwerk mit der jeweiligen TK-Vermittlungseinheit verbunden. Außerdem kann auch eine zusätzliche oder ausschließliche Netzwerk-Verbindung zwischen dem Verbindungsdaten-Rechner und dem Zentralrechner vorgesehen sein.

Besonders bevorzugt ist eine Ausführungsform des erfindungsgemäßen TK-Netzwerks, bei der der Verbindungsdaten-Rechner Zugriff auf eine Speichereinheit hat, auf der Zugangsberechtigungen von TK-Endgeräten und/oder Teilnehmern des TK-Netzwerks zu Kommunikationsdaten abgespeichert sind. Dadurch kann der Zugriff von TK-Endgeräten und/oder Teilnehmern auf Kommunikationsdaten generell und auch individuell beschränkt werden.

In der Regel wird es sich empfehlen, daß die Zugangsberechtigungen teilnehmerbezogen auf entsprechende, dem jeweiligen authorisierten Teilnehmer des TK-Netzwerks zugeordnete Teilmengen des gesamten Kommunikationsdatensatzes beschränkt sind, die Daten enthalten, welche auf den jeweiligen Teilnehmer bezogen sind, während die übrigen Kommunikationsdaten, die den Teilnehmer nichts angehen, für diesen unzugänglich bleiben.

Besonders bevorzugt ist auch eine Weiterbildung, bei der auf der Speichereinheit für jeden zugangsberechtigten Teilnehmer des TK-Netzwerks und/oder für jedes zugangsberechtigte TK-Endgerät ein kodierter Berechtigungsnachweis, vorzugsweise in Form eines Paßworts, abgespeichert ist, wobei das entsprechende TK-Endgerät bzw. der entsprechende Teilnehmer des TK-Netzwerks nur nach vorheriger Eingabe des Berechtigungsnachweises eine Freigabe zum Zugriff auf Kommunikationsdaten vom Verbindungsdaten-Rechner erhält.

Bei einer weiteren bevorzugten Ausführungsform ist vorteilhafterweise mindestens eines der TK-Endgeräte, die mit dem Verbindungsdaten-Rechner kommunizieren können, ein Personal-Computer (PC) oder mit einem solchen verbunden. Beispielsweise ist eine Parallelschaltung eines Telefongerätes mit einem PC denkbar, wobei der PC dem Netzwerkbenutzer einen besonders einfachen Zugriff auf die Kommunikationsdaten ermöglicht, während eine Spracheingabe und Rückantwort über Telefon einerseits einen erheblich größeren technischen Aufwand erfordern würde und andererseits auf sehr eng begrenzte Standardverfahren beschränkt wäre.

Von Vorteil ist es auch, wenn von einem oder mehreren der TK-Endgeräte über den Verbindungsdaten-Rechner Leistungsmerkmale der vom TK-Netzwerk-Betreiber angebotenen Dienstleistungen, beispielsweise Weckservice, Sperrung von Ferngesprächen, Überwachungsfunktionen etc., eingerichtet, geändert oder gelöscht werden können.

Ebenso kann eine Variante von Vorteil sein, bei der von einem oder mehreren der TK-Endgeräte beim Verbindungsdaten-Rechner aktuell aufgelaufene Entgeltforderungen des TK-Netzwerk-Betreibers für über das betreffende TK-Endgerät oder eine Gruppe anderer TK-Endgeräte bezogene Dienstleistungen abgefragt werden können. Bei dieser Ausführungsform empfiehlt es sich aber, auf jeden Fall eine Zugangsberechtigung des abfragenden Teilnehmers vor einer Freigabe der abgefragten Daten zu überprüfen. Der Netzteilnehmer kann sich auf diese Weise ständig über die auf ihn zukommenden Kosten informieren und muß nicht erst die Zusendung einer Rechnung am Ende des Abrechnungszeitraums abwarten.

Besonders vorteilhaft ist auch eine Ausführungsform, bei der von einem oder mehreren der TK-Endgeräte beim Verbindungsdaten-Rechner ein individuelles Datenprofil des betreffenden Teilnehmers, individuelle Rabatte, besondere Teilnahmebedingung etc. abgerufen werden können. Auch hier empfiehlt sich wieder die Abfrage eines Paßworts oder eine sonstige Überprüfung der Zugangsberechtigung des betreffenden Teilnehmers zu den abgefragten Daten. Selbstverständlich ist es auch jetzt schon möglich, daß ein Teilnehmer vom Netzwerkbetreiber oder seinen Bediensteten direkt Auskunft über sein individuelles Teilnehmerdatenprofil erhält. Dies wird jedoch derzeit nur schriftlich oder über Telefongespräche abgewikkelt, wozu der Netzwerk-Betreiber Personal abstellen muß, welches durch die obige Ausführungsform der Erfindung größtenteils eingespart werden kann.

In den Rahmen der vorliegenden Erfindung fällt auch ein Verbindungsdaten-Rechner zur Verwendung in einem TK-Netzwerk der oben beschriebenen Art, welcher über eine Direktleitung und zusätzlich über ein TK-Netzwerk mit mindestens einer, vorzugsweise einer Vielzahl von TK-Vermittlungseinheiten, sowie über eine weitere Direktleitung und/oder über das TK-Netzwerk mit dem zentralen Rechner, der aus der Ferne das TK-Netzwerk betreibt und wartet, verbunden ist. Auch die beschriebene Direktleitung zwischen dem Verbindungsdaten-Rechner und der jeweiligen TK-Vermittlungseinheit kann bei Ausführungsformen durch eine Verbindung über das TK-Netzwerk ersetzt werden.

Weiterhin fällt in den Rahmen der vorliegenden Erfindung auch ein Verfahren zum Betrieb eines TK-Netzwerkes bzw. eines Verbindungsdaten-Rechners der oben beschriebenen Art, bei dem im Verbindungsdaten-Rechner Kommunikationsdaten zum Abruf durch an das TK-Netzwerk angeschlossene TK-Endgeräte bereitgestellt werden, die bezogen auf jeden Teilnehmer die Rufnummer des Teilnehmers sowie die Rufnummern der von ihm in einem bestimmten Zeitraum angerufenen anderen Teilnehmer, Verbindungsbeginn, -dauer und/oder -ende einer jeden vermittelten Verbindung im TK-Netzwerk, bisher aufgelaufene Verbindungsentgelte für eine und/oder mehrere vermittelte Verbindungen im TK-Netzwerk in einem Abrechnungszeitraum, Dienstentgelte und aktuelle Tarife für im TK-Netzwerk angebotene Dienstleistungen umfassen.

Besonders bevorzugt ist eine Variante des erfindungsgemäßen Verfahrens, bei der der Verbindungsdaten-Rechner einem authorisiert anfragenden TK-Endgerät Kommunikationsdaten in Form von Benutzerstatistiken, Zeitprofilen und/oder Graphiken übermittelt. Insbesondere bei Benutzung eines PC zur Abfrage der Kommunikationsdaten können diese dem Benutzer auf besonders komfortable Art und Weise aufbereitet und übermittelt werden.

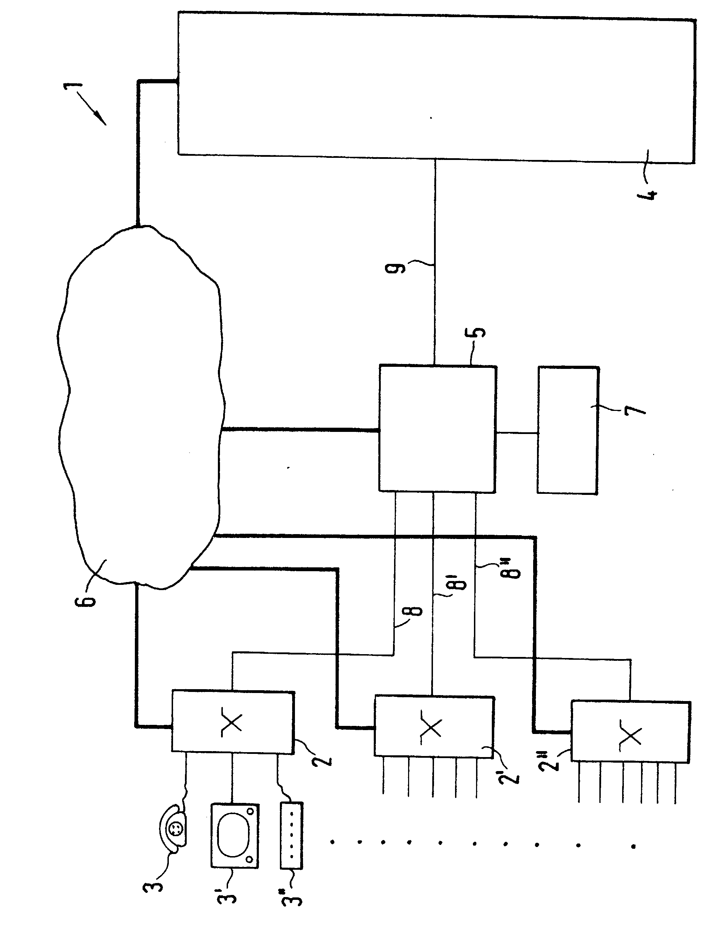

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand eines Ausführungsbeispiels näher erläutert.

In der Figur ist ein Funktionsschema einer Ausführungsform des erfindungsgemäßen TK-Netzwerkes mit Verbindungsdaten-Rechner schematisch dargestellt.

Das Telekommunikations(TK)-Netzwerk 1 enthält mehrere TK-Vermittlungseinheiten 2, 2', 2", an die TK-Endgeräte 3, 3', 3",... angeschlossen sind. Die TK-Vermittlungseinheiten 2, 2', 2" vermitteln Datenverbindungen zwischen verschiedenen TK-Endgeräten über ein On-Line-Datennetzwerk 6. Die TK-Endgeräte können von unterschiedlicher Art sein, beispielsweise ein Telefon 3, ein Personal Computer 3', ein Telefaxgerät 3" usw..

Gemanagt und gewartet wird das TK-Netzwerk 1 aus der Ferne mittels eines Zentralrechners 4, der einen Direktanschluß an das On-Line-Datennetzwerk 6 aufweisen kann.

Zwischen die TK-Vermittlungseinheiten 2, 2', 2" und den Zentralrechner 4 ist erfindungsgemäß ein Verbindungsdaten-rechner 5 geschaltet, der im gezeigten Ausführungsbeispiel über Direktverbindungen 8, 8', 8" mit den TK-Vermittlungseinheiten 2, 2', 2" und über eine weitere Direktverbindung 9 mit dem Zentralrechner 4 verbunden ist. Außerdem besteht auch eine bidirektionale Datenverbindung zwischen dem Verbindungsdaten-Rechner 5 und dem On-Line-Datennetzwerk 6. Der Verbindungsdatenrechner 5 hat auch Zugriff auf eine Speichereinheit 7, auf der insbesondere Zugangsberechtigungen von TK-Endgeräten 3, 3', 3" und/oder Teilnehmern des TK-Netzwerks 1 abgespeichert sind.

Außerdem hat der Verbindungsdaten-Rechner 5 Zugriff auf abgespeicherte Kommunikationsdaten, die ständig aktuell in den Verbindungsdaten-Rechner 5 von den TK-Vermittlungseinheiten 2, 2', 2" über die Direktverbindungen 8, 8', 8" eingehen. Diese Kommunikationsdaten umfassen u.a. die Rufnummern der anrufenden und angerufenen Teilnehmer des Netzwerks, Verbindungsbeginn, -dauer und/oder -ende einer jeden vermittelten Verbindung im TK-Netzwerk 1, bisher aufgelaufene Verbindungsentgelte für eine und/oder mehrere vermittelte Verbindungen in einem Abrechnungszeitraum, Dienstentgelte und aktuelle Tarife für im Netzwerk angebotene Dienstleistungen. Weiterhin können im Verbindungsdaten-Rechner 5 auf authorisierte Anfrage durch ein TK-Endgerät 3, 3', 3", die beispielsweise mit Hilfe eines Paßworts nachgewiesen werden kann, Kommunikationsdaten in Form von Benutzerstatistiken, Zeitprofilen und/oder Graphiken an die TK-Endgeräte übermittelt werden.

Neben der Verwaltung der Kommunikationsdaten und der Weitergabe derselben an den Zentralrechner 4 sowie ggf. an authorisierte Netzteilnehmer übernimmt der Verbindungsdaten-Rechner 5 auch weitere Server-Funktionen wie die Entgegennahme von Dienstleistungsanforderungen durch Netzwerk-Teilnehmer und Weitergabe an die entsprechenden Stellen, beispielsweise an die TK-Vermittlungseinheiten 2, 2', 2".

Damit steht prinzipiell jedem Netzwerk-Teilnehmer ein ständiger Zugriff auf seine Teilnehmerdaten, insbesondere auf exakte Gebührendaten seines Anschlusses oder verschiedener Anschlüsse sowie auf sein Verkehrsprofil offen.

## Patentansprüche

1. Telekommunikations (TK)-Netzwerk (1) mit einer TK-Vermittlungseinheit (2, 2', 2"), an der mindestens ein TK-Endgerät (3, 3', 3") angeschlossen ist, und die über eine Datenverbindung von einem Zentralrechner (4) aus der Ferne durch den Betreiber des TK-Netzwerks betrieben und gewartet werden kann, wobei insbesondere auch Gebührendaten von Teilnehmern des TK-Netzwerks (1) zum Zentralrechner (4) übermittelt werden können,
dadurch gekennzeichnet,
daß an die TK-Vermittlungseinheit (2, 2', 2") ein Verbindungsdaten-Rechner (5) angeschlossen ist, der fortlaufend in Echtzeit Kommunikationsdaten der TK-Netzverbindungen der an die TK-Vermittlungseinheit (2, 2', 2") angeschlossenen TK-Endgeräte (3, 3', 3") von der TK-Vermittlungseinheit (2, 2', 2") empfängt und diese Kommunikationsdaten auf Anfrage an den Zentralrechner (4) weiterleitet,
und daß über die TK-Vermittlungseinheit (2, 2', 2") und ein On-Line-Datennetzwerk (6) eine bidirektionale Datenverbindung zwischen einem TK-Endgerät (3, 3', 3") und dem Verbindungsdaten-Rechner (5) hergestellt werden kann und Kommunikationsdaten für dasselbe oder ein anderes an die TK-Vermittlungseinheit (2, 2', 2") angeschlossenes TK-Endgerät (3, 3', 3") abgerufen und/oder Dienstleistungen vom Netzwerkbetreiber angefordert werden können.

2. TK-Netzwerk nach Anspruch 1, dadurch gekennzeichnet, daß der Verbindungsdaten-Rechner (5) Zugriff auf eine Speichereinheit (7) hat, auf der Zugangsberechtigungen von TK-Endgeräten (3, 3', 3") und/oder Teilnehmern des TK-Netzwerks zu Kommunikationsdaten abgespeichert sind.

3. TK-Netzwerk nach Anspruch 2, dadurch gekennzeichnet, daß die Zugangsberechtigungen teilnehmerbezogen auf entsprechende, dem jeweiligen authorisierten Teilnehmer des TK-Netzwerks (1) zugeordnete Teilmengen des gesamten Kommunikationsdatensatzes beschränkt sind.

4. TK-Netzwerk nach Anspruch 2 oder 3, dadurch gekennzeichnet, daß auf der Speichereinheit (7) für jeden zugangsberechtigten Teilnehmer des TK-Netzwerks (1) und/oder für jedes zugangsberechtigte TK-Endgerät (3, 3', 3") ein kodierter Berechtigungsnachweis, vorzugsweise in Form eines Paßworts, abgespeichert ist, und daß das entsprechende TK-Endgerät (3, 3', 3") bzw. der entsprechende Teilnehmer des TK-Netzwerks (1) nur nach vorheriger Eingabe des Berechtigungsnachweises eine Freigabe zum Zugriff auf Kommunikationsdaten vom Verbindungsdaten-Rechner (5) erhält.

5. TK-Netzwerk nach einem der vorhergehenden Ansprüche, dadurch gekennzeichnet, daß mindestens eines der TK-Endgeräte (3, 3', 3''), die mit dem Verbindungsdaten-Rechner (5) kommunizieren können, ein Personal-Computer (3') ist oder mit einem solchen verbunden ist.

6. TK-Netzwerk nach einem der vorhergehenden Ansprüche, dadurch gekennzeichnet, daß von einem oder mehreren der TK-Endgeräte (3, 3', 3") über den Verbindungsdaten-Rechner (5) Leistungsmerkmale der vom TK-Netzwerk-Betreiber angebotenen Dienstleistungen, beispielsweise Weckservice, Sperrung von Ferngesprächen, Überwachungsfunktionen etc., eingerichtet, geändert oder gelöscht werden können.

7. TK-Netzwerk nach einem der vorhergehenden Ansprüche, dadurch gekennzeichnet, daß von einem oder mehreren der TK-Endgeräte (3, 3', 3") beim Verbindungsdaten-Rechner (5) aktuell aufgelaufene Entgeltforderungen des TK-Netzwerk-Betreibers für über das betreffende TK-Endgerät oder eine Gruppe anderer TK-Endgeräte bezogene Dienstleistungen abgefragt werden können.

8. TK-Netzwerk nach einem der vorhergehenden Ansprüche, dadurch gekennzeichnet, daß von einem oder mehreren der TK-Endgeräte beim Verbindungsdaten-Rechner ein individuelles Datenprofil des betreffenden Teilnehmers, individuelle Rabatte, besondere Teilnahmebedingung etc. abgerufen werden können.

9. Verbindungsdaten-Rechner (5) zur Verwendung in einem TK-Netzwerk (1) nach einem der vorhergehenden Ansprüche, dadurch gekennzeichnet, daß der Verbindungsdaten-Rechner (5) über eine Direktleitung (8, 8', 8") und über ein On-Line-Datennetzwerk (6) mit mindestens einer, vorzugsweise einer Vielzahl von TK-Vermittlungseinheiten (2, 2', 2"), sowie über eine weitere Direktleitung (9) mit einem Zentralrechner (4) verbunden ist.

10. Verfahren zum Betrieb eines TK-Netzwerks (1) nach einem der Ansprüche 1 bis 8 bzw. eines Verbindungsdaten-Rechners (5) nach Anspruch 9, dadurch gekennzeichnet, daß im Verbindungsdaten-Rechner (5) Kommunikationsdaten zum Abruf durch an das TK-Netzwerk (1) angeschlossene TK-Endgeräte (3, 3', 3") bereitgestellt werden, die bezogen auf jeden Teilnehmer die Rufnummer des Teilnehmers sowie die Rufnummern der von ihm in einem bestimmten Zeitraum angerufenen anderen Teilnehmer, Verbindungsbeginn, -dauer und/oder -ende einer jeden vermittelten Verbindung im TK-Netzwerk (1), bisher aufgelaufene Verbindungsentgelte für eine und/oder mehrere vermittelte Verbindungen im TK-Netzwerk (1) in einem Abrechnungszeitraum, Dienstentgelte und aktuelle Tarife für im TK-Netzwerk (1) angebotene Dienstleistungen umfassen.

11. Verfahren nach Anspruch 10, dadurch gekennzeichnet, daß der Verbindungsdaten-Rechner (5) einem authorisiert anfragenden TK-Endgerät (3, 3', 3") Kommunikationsdaten in Form von Benutzerstatistiken, Zeitprofilen und/oder Graphiken übermittelt.
